(19) Europäisches Patentamt

European Patent Office

Office européen des brevets

(11) **EP 1 602 964 A1**

(12) **EUROPEAN PATENT APPLICATION**
published in accordance with Art. 158(3) EPC

(43) Date of publication:
**07.12.2005 Bulletin 2005/49**

(51) Int Cl.[7]: **G02F 1/13**, G11B 7/135

(21) Application number: **04717293.7**

(22) Date of filing: **04.03.2004**

(86) International application number:
**PCT/JP2004/002755**

(87) International publication number:
**WO 2004/079436 (16.09.2004 Gazette 2004/38)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **07.03.2003 JP 2003061812**
**29.08.2003 JP 2003307130**

(71) Applicant: **ASAHI GLASS COMPANY LTD.**
**Tokyo 100-8405 (JP)**

(72) Inventors:
- **MURATA, K.,**
  **c/o Asahi Glass Koriyama Elec. Mat.**
  **Koriyama-shi, Fukushima 96302 (JP)**
- **OSAWA, M., c/o Asahi Glass Company Ltd.**
  **Yokohama-shi, Kanagawa 221-8755 (JP)**

(74) Representative: **Müller-Boré & Partner**
**Patentanwälte**
**Grafinger Strasse 2**
**D-81671 München (DE)**

(54) **OPTICAL ATTENUATOR AND OPTICAL HEAD DEVICE**

(57)    The present invention provides an optical attenuator reducing variations in optical attenuation amount in response to temperature change, and an optical head device having properties excellent in recording and reproducing an information. An optical attenuator comprising a liquid crystal element having spirally arranged molecules in which a liquid crystal layer 107 is sandwiched between transparent electrodes 103 and 104, and a polarizing beam splitter 110 whose transmittance is changed depending on a polarization state, wherein the ordinary refractive index ($n_o$) and the extraordinary refractive index ($n_e$) of liquid crystal, the angle ($\theta_{pt}$) of liquid crystal molecules against the transparent substrate surfaces, the thickness (d) of the liquid crystal layer 107 and the wavelength ($\lambda$) of incident light, constituent elements are configured so that the value A satisfies the range of from 0.5 to 1.5 in the conditional formula defined by the formula (1):

$$A = \frac{\Delta n \cdot d}{\lambda} \qquad (1)$$

wherein

$$\Delta n = n_o \cdot n_e / \sqrt{n_o^2 \cdot \cos^2(\theta_{pt}) + n_e^2 \cdot \sin^2(\theta_{pt})} - n_o$$

Fig. 1

**Description**

TECHNICAL FIELD

The present invention relates to an optical attenuator and an optical head device, in particular to an optical head device to be used for recording or reproducing an information on an optical recording medium, and to an optical attenuator to be employed in the optical head device.

BACKGROUND ART

Recently, an optical recording medium capable of recording and/or reproducing information by irradiating with light has been widely used. As an example of such an optical recording medium, a CD-ROM for exclusive use for reproducing, having fine concavo-concave patterns corresponding to a recorded information formed on a substrate, is known.

Further, as another example of such an optical recording medium, an optical magnetic disk such as MO disk in which reproducing of an information is conducted by using magnetic Kerr effect, a phase-change type disk provided with a signal recording layer made of a phase change material, or a write-once optical disk such as a CD-R adapted to reproduce an information by detecting the difference of reflectivity at a recording mark which is formed in a signal recording layer made of an organic pigment material, have been known.

On the other hand, in order to record and/or reproduce various types of informations on the above various types of optical disks, various types of recording/reproducing devices employing optical head devices have been developed. In an optical head device for recording and/or reproducing an information on an optical recording medium such as CD-R, quantity of light converged on an optical recording medium by e.g. an objective lens needs to be large at a time of recording an information and needs to be small at a time of reproducing the information.

Heretofore, in order to satisfy this requirement, volume of emitted light from a laser diode has been changed by changing the injection current to the laser diode for emitting light. However, there has been such a problem that noise is increased or quantity of light becomes unstable when the injection current is reduced to reduce the emission quantity of light in some types of laser diode to be used.

A construction has been proposed which uses an optical attenuator in combination with the optical head device to irradiate an optical disk with a high quality laser light having little noise with low power so as to conduct a high quality recording and/or reproducing of an information with as low in noise as possible (for example, JP-A-202-260269).

Further, as an optical attenuator to be used for such an optical head device, one having a construction of combining a polarizing beam splitter (PBS) and a liquid crystal element has been known. The liquid crystal element changes the polarization state of incident laser light when a predetermined voltage is applied to the element, whereby the proportion of laser light transmitted through the polarizing beam splitter and incident into an optical recording medium is controlled depending on the polarization state.

DISCLOSURE OF THE INVENTION

There has been a problem that when the environmental temperature is changed, the ordinary refractive index and the extraordinary refractive index of the liquid crystal are changed and the attenuation amount of the optical attenuator using the liquid crystal element is changed.

Further, in an optical head device comprising the optical attenuator, when the polarization state such as the polarization direction of light incident into the liquid crystal element is changed, the volume of transmission light reaching an optical recording medium is changed. Therefore, it has been necessary to precisely control the polarization direction of light incident into the optical element, which has been causing an increase of cost for adjusting the polarization direction and reduction of yield.

The present invention provides an optical attenuator comprising a liquid crystal element which comprises a pair of transparent substrates having transparent electrodes formed on their respective surfaces facing to each other and a liquid crystal layer sandwiched between the transparent electrodes, whereby the direction of liquid crystal molecules in the liquid crystal layer is twisted spirally around the axis in the thickness direction of the liquid crystal layer, and at least one polarizing transmission element varying the transmittance depending upon the polarization state of the incident light, characterized in that the ordinary refractive index ($n_o$) and the extraordinary refractive index ($n_e$) of liquid crystal constituting the liquid crystal element, the angle ($\theta_{pt}$) of the liquid crystal molecules close to a transparent substrate against the transparent substrate surface, the thickness (d) of the liquid crystal layer and the wavelength ($\lambda$) of incident light, are determined so that the value A satisfies a range of from 0.5 to 1.5 in the first conditional formula defined by the formula (1) :

$$A = \frac{\Delta n \cdot d}{\lambda} \tag{1}$$

wherein

$$\Delta n = n_o - n_e \Big/ \sqrt{n_o^2 \cdot \cos^2(\theta_{pt}) + n_e^2 \cdot \sin^2(\theta_{pt})} - n_o$$

Further, the present invention provides the optical attenuator, wherein the angle ($\theta_t$) between the two alignment directions of the respective liquid crystal molecules close to the pair of the transparent substrates, the quantity of light ($P_{in}$) incident into the optical attenuator and the quantity of light ($P_{out}$) output from the optical attenuator (provided that the light-reduction constant B is -60, and the value of the angle variable C is within a range of from 60 to 90), are determined so as to satisfy a second conditional formula defined by the formula (2):

$$\theta_t = \frac{P_{out} \cdot B}{P_{in}} + C \tag{2}$$

Further, the present invention provides the attenuator, which has two such polarizing transmission elements, which are disposed on the light incident side and the light output side of the liquid crystal, respectively.

Further, the present invention provides the optical attenuator, wherein at least one of the two such polarizing transmission elements, is made to be a polarizing diffraction element whereby the diffraction efficiency varies depending upon the polarization direction of the incident light.

Further, the present invention provides the optical attenuator, wherein at least one of the two such polarizing transmission elements is made to be integral with the liquid crystal element.

Further, the present invention provides the optical attenuator, wherein the liquid crystal element is provided with nematic liquid crystal.

Further, the present invention provides the optical attenuator, wherein the transparent substrate is made of glass.

Further, the present invention provides an optical head device for reproducing and/or recording information, which comprises a light source, a light-converging means for converging light emitted from the light source on an optical recording medium, a photodetector for detecting a reflected light from the optical recording medium of the converged emission light, an optical attenuator to change the volume of the transmission light by an applied voltage, disposed in a light path between the light source and the optical recording medium or in a light path between the optical recording medium and the photodetector, and a voltage-controlling means to apply a voltage to the optical attenuator, characterized in that the optical attenuator is the optical attenuator.

Further, the present invention provides the optical head device, wherein the optical head device is an optical head device for carrying out reproducing and recording of information on an optical recording medium, wherein the ratio $P_1/P_2$ is within a range of from 0.2 to 0.8, where $P_1$ is the quantity of light converged on the optical recording medium for reproducing information, and $P_2$ is the quantity of light converged for recording information

BRIEF DESCRIPTION OF THE DRAWINGS

Fig. 1 is a side view showing an example of the optical attenuator of the present invention.
Fig. 2 is a view showing the alignment direction of liquid crystal unit and the transmission axis of a polarizing transmission element.
Fig. 3 is a graph showing the result of simulation experiment when the twist angle ($\theta_t$) is 60°.
Fig. 4 is a graph showing the result of simulation experiment when the twist angle ($\theta_t$) is 42°.
Fig. 5 is a graph showing the result of simulation experiment when the twist angle ($\theta_t$) is 10°.
Fig. 6 is a graph showing the result of simulation experiment when the optical attenuation amount is 20±3%.
Fig. 7 is a graph showing the result of simulation experiment when the optical attenuation amount is 80±3%.
Fig. 8 is a graph showing the result of simulation experiment when the birefringency amount ($\Delta n$) of liquid crystal is 0.108.
Fig. 9 is a graph showing the result of simulation experiment when the birefringency amount ($\Delta n$) of liquid crystal is 0.136.
Fig. 10 is a schematic constructional view showing an example of the optical head device of the present invention.

Fig. 11 is a graph showing the relation between the voltage applied to the liquid crystal layer and the intensity of light transmitted through the optical attenuator with a parameter of angular error amount of polarization direction of incident light with respect to the liquid crystal unit.

Fig. 12 is a side view showing another example of the optical attenuator of the present invention.

Fig. 13 is a graph showing an example of the measurement of the relation between the directional error amount of polarization direction with respect to the optical attenuator and relative light intensity when the polarizing transmission element is disposed at the light-incident side.

BEST MODE FOR CARRYING OUT THE INVENTION

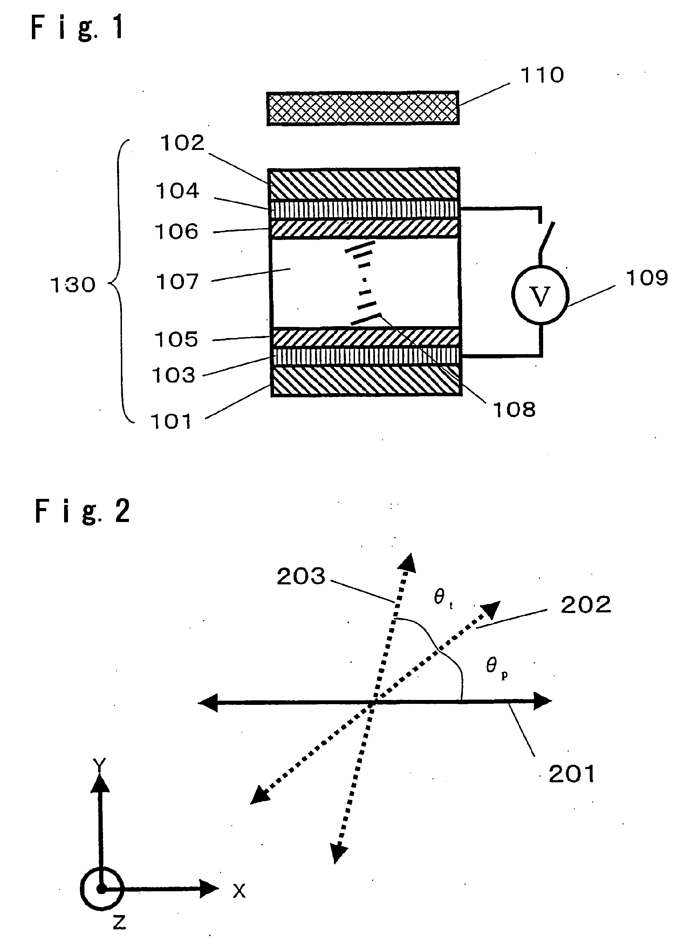

Fig. 1 shows an example of the optical attenuator of the present invention. Transparent substrates 101 and 102 made of e.g. a glass or a plastic are provided with transparent electrodes 103 and 104 made of e.g. ITO. Further, alignment films 105 and 106 made of e.g. polyimide are formed and subjected to an alignment treatment such as rubbing, and then, the two transparent substrates are disposed so that they oppose to each other with a gap of uniform spacing, and the periphery of the transparent substrates are bonded each other with e.g. an adhesive (not shown) to construct a cell structure. A liquid crystal is sealed in the cell to form a liquid crystal layer 107. As the liquid crystal, e. g. a nematic liquid crystal may be used and a chiral compound may be added.

To the transparent electrode 103 and 104, a voltage control unit 109 is connected which enable to apply a voltage from the outside, to constitute a liquid crystal unit 130. An alignment treatment may be applied so that the liquid crystal molecules 108 are at an angle with respect to a polyimide surface at the interface between the polyimide and the liquid crystal layer. The angle is referred to as pretilt angle ($\theta_{pt}$). The direction of liquid crystal molecules is twisted spirally around the axis in the thickness direction of the liquid crystal layer. The polarizing transmission element 110 is an element which changes the transmittance depending on a polarization state of incident light. In Fig. 1, light to be attenuated is incident into the liquid crystal unit 130 from the side of the transparent substrate 101, output from the transparent substrate 102 and incident into the polarizing transmission element 110. The polarizing transmission element 110 is preferably disposed at least behind the liquid crystal unit 130 in the traveling direction of light.

Fig. 2 shows the relation among alignment directions 202 and 203 of liquid crystal molecules at the respective interfaces between the liquid crystal layer and alignment films of the respective transparent substrates, and the transmission axis 201 of the polarizing transmission element. Light incident into the optical attenuator is a linearly polarized light polarized in an X axis direction. The angle between X axis and the alignment direction 202 of liquid crystal molecules at the interface between the liquid crystal layer and the alignment film (105 in Fig. 1) on the transparent substrate in the light-input side of the liquid crystal unit-130, is designated as pretwist angle ($\theta_p$ in Fig. 2), and an angle between alignment directions 202 and 203 is designated as twist angle ($\theta_t$ in Fig. 2). There is no limitation in the pretwist angle and the twist angle. However, the twist angle is preferably from 5 to 90° considering easiness of production. Further, the ordinary refractive index of the liquid crystal is designated as $n_o$, the extraordinary refractive index is designated as $n_e$ and the depth of the liquid crystal layer is designated as d. The wavelength of light to be attenuated is designated as $\lambda$.

When a voltage of at most a threshold voltage is applied to the liquid crystal layer, polarization of light transmitted through the liquid crystal unit is converted from a linear polarization to an ellipsoidal polarization in general. Then, a voltage is applied to drive liquid crystal molecules so that the direction of the liquid crystal molecules is in parallel with the direction of electric field. In this case, a linearly polarized light incident into the liquid crystal unit is transmitted through the liquid crystal unit as it is without changing the polarization state. By controlling the voltage applied to the liquid crystal unit, it is possible to change the polarization state of light transmitted through the liquid crystal unit and control the quantity of light transmitted through the polarizing transmission element after transmitted through the liquid crystal unit.

Here, the liquid crystal layer is considered as a group of N pieces of single-axis type birefringent plate in which the optical axis direction is twisted little by little, obtained by equally dividing the liquid crystal layer into N pieces in the direction of the thickness d. The phase difference r where the liquid crystal molecules are not twisted in the direction of the thickness of liquid crystal layer, namely, around a virtual axis in the thickness direction, is represented by the following formula:

$$\Gamma = \frac{2\pi \cdot \Delta n \cdot d}{\lambda}$$

wherein:

$$\Delta n = n_o \cdot n_e / \sqrt{n_o^2 \cdot \cos^2(\theta_{pt}) + n_e^2 \cdot \sin^2(\theta_{pt})} - n_o$$

Provided that the twist is uniform in the direction of the thickness, the phase differences of the respective birefringent plates obtained by equally dividing the liquid crystal layer, is $\Gamma/N$. Where the polarization state of light incident into the liquid crystal unit and the polarization state of light transmitted through the liquid crystal unit are expressed by Stokes parameters and designated as $S_{in}$ and $S_{out}$ respectively, they are represented by the following expressions:

$$S_{in} = \begin{pmatrix} 1 \\ 1 \\ 0 \\ 0 \end{pmatrix}$$

$$S_{out} = \begin{pmatrix} 1 \\ S_1 \\ S_2 \\ S_3 \end{pmatrix}$$

These formulae can be expressed as follows by using a Mueller's matrix:

$$S_{out} = R(\theta_p) \cdot R(\theta_t/N)^{(N-1)} \cdot [W(\Gamma/N) \cdot R(-\theta_t/N)]^{(N-1)} \cdot W(\Gamma/N) \cdot R(-\theta_p) \cdot S_{in}$$

wherein:

$$R(\varphi) = \begin{bmatrix} 1 & 0 & 0 & 0 \\ 0 & \cos(2\varphi) & -\sin(2\varphi) & 0 \\ 0 & \sin(2\varphi) & \cos(2\varphi) & 0 \\ 0 & 0 & 0 & 1 \end{bmatrix}$$

$$W(x) = \begin{bmatrix} 1 & 0 & 0 & 0 \\ 0 & 1 & 0 & 0 \\ 0 & 0 & \cos(x) & -\sin(x) \\ 0 & 0 & \sin(x) & \cos(x) \end{bmatrix}$$

Provided that the polarizing transmission element is an ideal polarizer of single-axis type having a transmittance of 100% in X axis direction and 0% in Y axis direction, the transmittance $P_{out}$ of the optical attenuator becomes as follows:

$$P_{out} = \frac{S_1 + 1}{2}$$

which becomes a function of $n_o$, $n_e$, d, $\theta_t$, $\theta_p$, $\theta_{pt}$ and $\lambda$. By calculating $P_{out}$, a desired attenuation rate of the attenuator can be obtained.

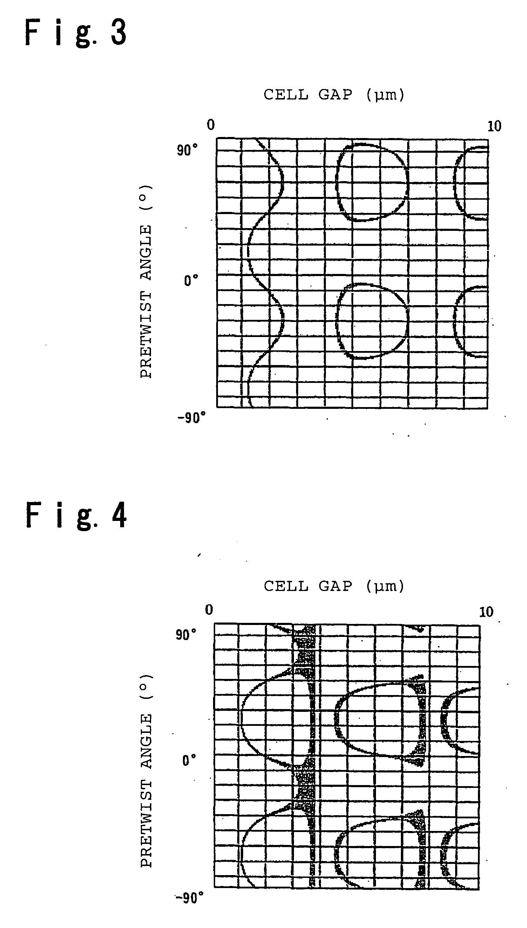

Figs. 3, 4 and 5 show simulation results. In each result, it is assumed that the birefringence amount of liquid crystal is ($\Delta$n)=0.1005 and the wavelength is ($\lambda$)=405 nm. Here, $\Delta$n is defined as birefringence amount. Twist angles ($\theta_t$) are 60°, 42° and 10° in the results of Figs. 3, 4 and 5 respectively. The horizontal axis of each graph represents the thickness (d) of the liquid crystal layer, namely, the cell gap and the vertical axis represents the pretwist angle ($\theta_p$). Each graph shows the relation between the thickness of liquid crystal layer and the pretwist angle where the optical attenuation amount becomes 50±3%. The distribution of pretwist angle (distribution of solution) with respect to the thickness of the liquid crystal layer where the optical attenuation amount becomes 50±3%, is changed depending on the twist angle ($\theta_t$), and the distribution of solution becomes wide when the twist angle ($\theta_t$) is 42° (in the case of Fig. 4).

Particularly, the distribution of solution is wide at a liquid crystal layer thickness in the vicinity of 3.5 $\mu$m. If the distribution of solution is wide, it is possible to increase the tolerance for production-induced variation of parameter and to reduce the variation of optical attenuation amount due to a change of refractive index of liquid crystal caused by a change of environmental temperature, such being highly preferred.

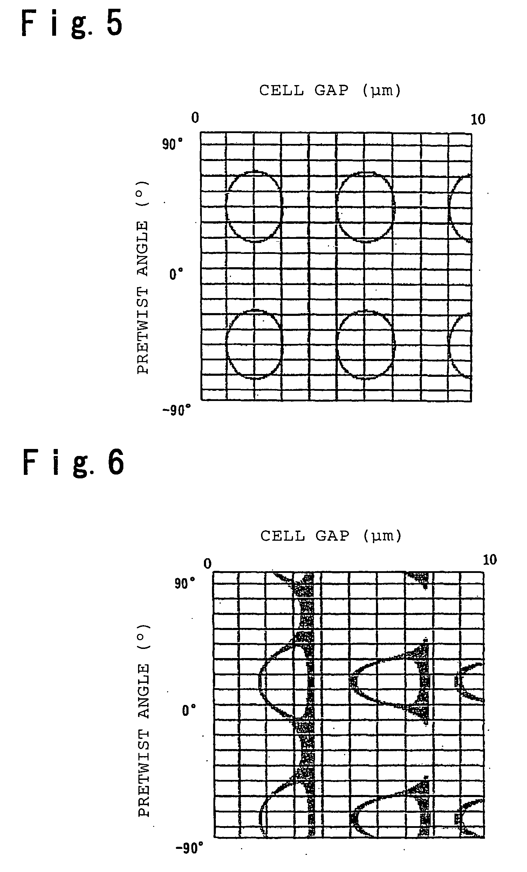

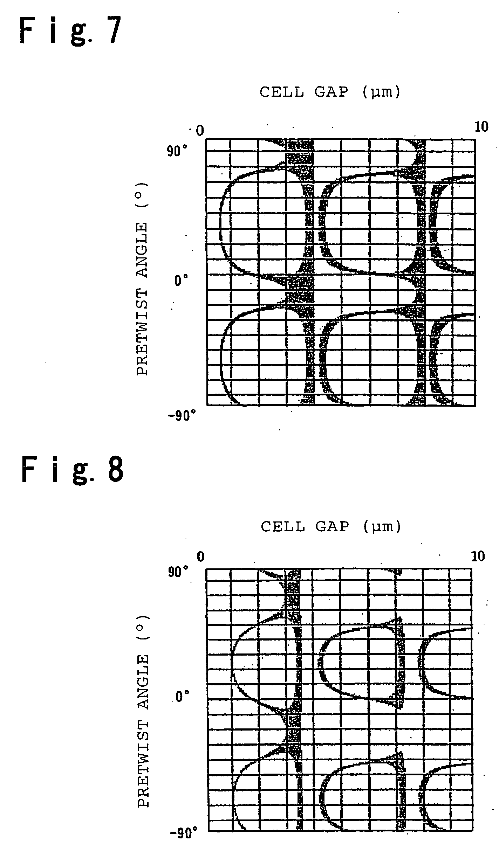

The calculation is conducted at optical attenuation amounts of 20±3% and 80±3% in the same manner, and as a result, twist angles ($\theta_t$) producing wide distribution of solution are present in the same manner and they are 60° and 24° for the respective optical attenuation amounts. The simulation results are shown in Figs. 6 and 7 respectively. A region of wide distribution of solution exists particularly at a liquid crystal layer thickness in the vicinity of 3.5 $\mu$m in the same manner as the case where the optical attenuation amount is 50%±3% (in the case of Fig. 4).

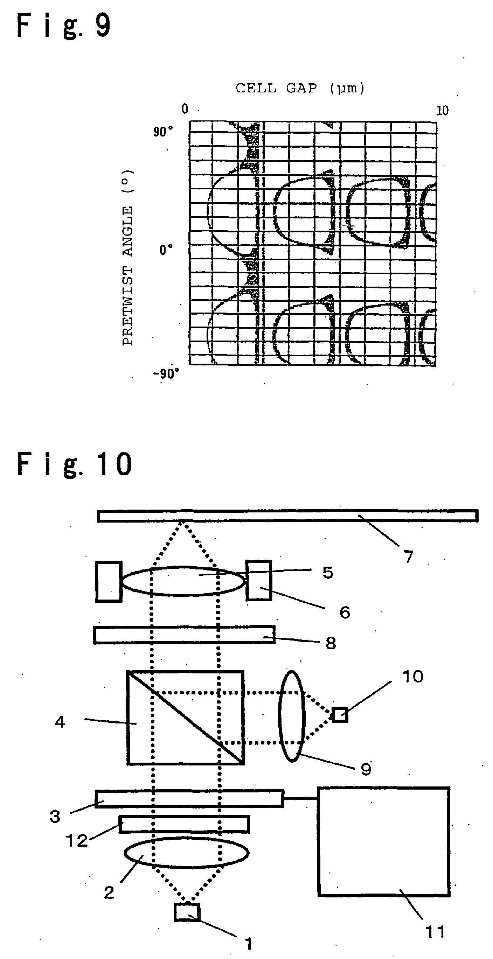

Then, with respect to the cases where the birefringence amounts ($\Delta$n) of liquid crystal are 0.108 and 0.136, twist angles ($\theta_t$) producing a wide distribution of solution for an optical attenuation amount of 50±3% were calculated and found that the twist angles ($\theta_t$) became 42° in the same manner as the case of $\Delta$n=0.1005. The results are shown in Figs. 8 and 9. The thickness of the liquid crystal layer producing particularly wide distribution of solution tends to decrease as $\Delta$n increases. As a result of repeated simulation, it was found that there is the following relation between $\Delta$n, d and $\lambda$:

$$A = \frac{\Delta n \cdot d}{\lambda}$$

where A is from 0.5 to 1.5, preferably from 0.75 to 0.95. In this case, the twist angle ($\theta_t$) has the following relation with the transmittance ($P_{out}$)

$$\theta_t = \frac{P_{out} \cdot B}{P_{in}} + C$$

where B is -60 and C is from 60 to 90, preferably from 65 to 75.

By selecting the parameters ($n_o$, $n_e$, d, $\theta_t$, $\theta_p$, $\theta_{pt}$) satisfying these conditions, and producing the liquid crystal unit, the tolerance for production-induced variation of parameters can be increased and the variation of optical attenuation amount when the refractive index of the liquid crystal is changed by the change of environment temperature, can be decreased.

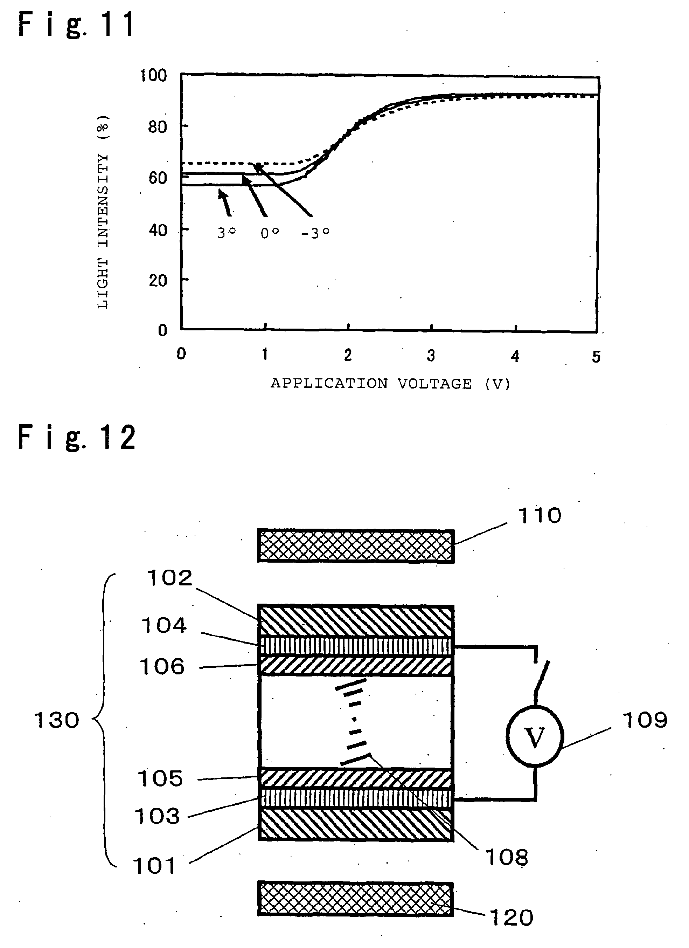

Then, a case where the polarization direction of light incident into the optical attenuator of Fig. 1 is changed is considered. For example, Fig. 11 shows an example of intensity of light transmitted through the optical attenuator in response to the voltage applied to the liquid crystal layer provided that the incident light is linearly polarized light and polarized in X axis direction in Fig. 2 and the polarization direction is rotated around Z axis. Three curves in Fig. 11 show cases where the relative angular error between the polarization direction of linearly polarized incident light and X axis direction are 3°, 0° and -3° respectively. Thus by the relative angular error of the polarization direction, light intensity at a voltage in the vicinity of 0 V is changed.

Namely, in a case where the optical attenuator is used, for example, in a case where the intensity of light transmitted is increased (5 V) or decreased (0 V) by applying voltages of 5 V and 0V to the liquid crystal layer, the relative light intensities corresponding to these voltages are changed by the relative angular error between X axis direction and polarization direction of linearly polarized incident light. In other words, it becomes necessary to precisely control the polarization direction of linearly polarized incident light so as not to change the relative light intensities.

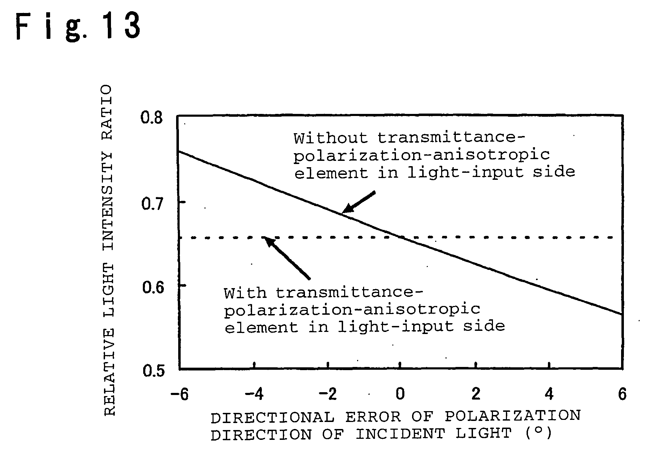

Fig. 12 shows another example of the optical attenuator of the present invention. Here, the same reference numerals as those used in Fig. 1 indicate the same elements. By disposing the second polarizing transmission element 120 in the light-input side (in the side of the transparent 101) of the liquid crystal unit, polarization of light incident into the liquid crystal unit is stabilized by the second polarizing transmission element 120 even in a case where the polarization direction of light incident into the optical attenuator is changed, and the above-mentioned relative light intensity is not changed, such being highly preferred. Fig. 13 shows an example of measurement of angular error of polarization direction of incident light into the optical attenuator and the relative light intensity in a case where the polarizing transmission element is disposed in the light-input side, as well as the result in a case where the polarizing transmission element is not disposed.

Further, as the polarizing transmission element, an absorption type polarizer produced by e.g. adding a pigment to a polymer followed by drawing, a wire grating or a polarizing beam splitter which changes substantial transmittance by changing the optical path by polarization direction, may be used. In particular, a polarizing diffraction element having different diffraction efficiencies depending on the polarization direction of the incident light, is preferred since it can be thin and it can be integrally formed with the liquid crystal unit to easily achieve miniaturization. The polarizing diffraction element can be produced by employing a liquid crystal, a high-molecular liquid crystal or a birefringent medium such as lithium niobate ($LiNbO_3$).

Further, it is more preferred that the liquid crystal unit and the polarizing transmission element is integrally formed since it enables to achieve miniaturization, light-weight, reduction of the number of parts and the like.

Further, Fig. 10 shows an example of an optical head device including the optical attenuator thus produced. The optical attenuator of the present invention is constituted by the liquid crystal element 3, and the polarizing transmission elements 4 and 12 which are disposed between the collimator lens 2 and quater-waveplate 8. Light emitted from a laser diode 1 is converted to be a parallel light by the collimator lens 2, transmitted through the polarizing transmission element 12 and transmitted through the liquid crystal element 3. The liquid crystal element 3 can be applied with a voltage from the outside by means of a voltage control device 11. The light transmitted through the liquid crystal element 3 is transmitted through the polarizing transmission element 4. The polarizing transmission element 4 changes the quantity of light output to the optical recording medium depending on the polarization direction of incident light when the light incident into this element is output. The polarizing transmission element 4 may, for example, be a polarizing beam splitter, a prism, a diffraction grating including a wire grating, or a polarizing diffraction element. In the example of Fig. 10, a polarizing beam splitter is employed as the polarizing transmission element 4, and a polarizing diffraction element is employed as the polarizing transmission element 12. Further, the polarizing transmission elements 4 and 12 can be adhered to the liquid crystal element 3 to be integrally formed. The light transmitted through the polarizing transmission element 4 is transmitted through a quater-waveplate 8 and converged on the optical recording medium 7 by a converging lens 5 held by an actuator 6.

Light reflected by the optical recording medium 7 travels reversely through the above optical path. In the case of Fig. 10, since a polarizing beam splitter is employed as the polarizing transmission element 4, the light reversely traveling through the optical path is reflected by the polarizing transmission element 4 and converged by the converging lens 9 to reach the photodetector 10. Here, by applying plural different voltages to the liquid crystal element 3, (actually to transparent electrodes formed on the surfaces of the transparent substrates constituting the liquid crystal element), it is possible to change the polarization direction of the light transmitted through the liquid crystal element 3 and change the quantity of light converged on the optical recording medium after transmitted through the polarizing transmission element 4.

The ratio $P_1/P_2$ of the quantity of light $P_1$ converged on the optical recording medium for reproducing an information of the optical recording medium to the quantity of light $P_2$ converged for recording an information into the optical recording medium, is preferably within a range of from 0.2 to 0.8, more preferably within a range of from 0.3 to 0.6. If the ratio of quantity of light is within this range, recording of information is sufficiently possible by making the quantity of light 100% at a time of recording an information, and at a time of reproducing, by making the quantity of light to be within a range of from 20 to 80% (namely from 0.2 to 0.8), preferably within a range of from 30 to 50% (namely from 0.3 to 0.6), with respect to the quantity of light for recording, reproducing of information can be achieved without recording an information into the optical recording medium and with high S/N ratio, such being highly preferred.

Now, Examples are described as follows.

An optical attenuator having an optical attenuation ratio of 36.5% to be used for a wavelength of 405 nm was produced. The detail of the production is described as follows by using Figs. 1 and 2. With respect to the liquid crystal unit, as shown in Fig. 1, on transparent substrates 101 and 102 of 1.0 mm thick and made of glass, transparent electrically conductive ITO films of 30 nm thick were formed by a sputtering method, and patterned by photolithography and wet etching methods to form transparent electrodes 103 and 104. On the transparent electrodes 103 and 104 on the transparent substrate 101 and 102, alignment films 105 and 106 of polyimide of about 50 nm thick were applied by a flexo printing method and baked. An alignment treatment by rubbing with a cloth was applied to the alignment films 105 and 106 of polyimide film. This alignment treatment was conducted so that the liquid crystal molecules 108 were twisted around the axis in the thickness direction of the liquid crystal layer 107. An epoxy type sealing material (not shown) was printed on the transparent substrate 101 by a screen printing method. In the epoxy type sealing material (not shown), 3% (in mass ratio. Hereinafter the same definition is applied) of fiber spacers having a diameter of 3.6 $\mu$m for fixing the thickness of the liquid crystal layer, and 2% of plastic balls having a diameter of 4 $\mu$m and having a surface provided with an electrically conductive coating to obtain conductivity between the transparent substrates 101 and 102, were contained. After the transparent substrates 101 and 102 were overlayed and aligned to each other, they were pressed to be bonded with a pressure of $6 \times 10^4$ N/m$^2$, at a temperature of 170°C to form a cell. Into the cell thus formed, a nematic liquid crystal was injected by a vacuum injection method to form a liquid crystal layer 107, and the injection port was sealed with a UV adhesive agent (not shown) to form a liquid crystal element having an external dimension of 8 mm $\times$ 10 mm. The liquid crystal element is adapted for application of voltage to the liquid crystal layer from the outside via the transparent electrodes 103 and 104. The parameters of the liquid crystal element (liquid crystal unit of the optical attenuator) were made to be $\theta_p$=-10°, $\theta_t$=50°, $\Delta$n=0.1005 and d=3.6.

The liquid crystal element thus produced was integrated into an optical head device as shown in Fig. 10. The liquid crystal element 3 was disposed between a polarizing beam splitter being a polarizing transmission element 4 disposed in the optical head device and a polarizing diffraction element being a polarizing transmission element 12. The liquid crystal element was controlled by output voltage from a voltage control device 11. Light emitted from a laser diode 1 was transmitted through a collimator lens 2, the polarizing transmission element 12, the liquid crystal element 3, the polarizing beam splitter as the polarizing transmission element 4 and quater-waveplate 8 in this order, and converged on an optical recording medium 7 after transmitted through a converging lens 5 held by an actuator 6. The light converged was reflected by the optical recording medium 7, transmitted through the converging lens 5 and quater-waveplate 8 in this order to have its polarization direction changed by 90°, and reflected by the polarizing beam splitter and introduced to a photodetector 10 by a converging lens 9.

In this condition, the liquid crystal element 3 was applied with a voltage, a photodetector was disposed at the position of the optical recording medium 7 and the quantity of light converged was measured. As a result, it was found to be 37% (the quantity of light under application of a voltage of 10 V$_{rms}$ (a rectangular alternating current of 1 kHz) is defined as 100%) under application of a voltage of 0.4 V$_{rms}$ (a rectangular alternating current of 1 kHz) to the liquid crystal element, and the quantity of light converged on the optical recording medium 7 could be changed by the voltage applied to the liquid crystal. When an information recording to an optical recording medium is conducted by employing the optical head device, the liquid crystal element 3 is applied with a voltage of 10 V$_{rms}$ (a rectangular alternating current of 1 kHz) to allow a large quantity of light to be converged on the optical recording medium 7. When reproducing of an information from the optical recording medium 7 is conducted, the voltage applied to the liquid crystal element 3 is set to be 0.4 V$_{rms}$ (a rectangular alternating current of 1 kHz) to attenuate the quantity of light converged on the optical recording medium 7 to be 37% without changing the output power of the laser diode 1. Thus, reproduction of an information was carried out with low noise. Further, it was confirmed that variation of the optical attenuation amount was maintained to be on a low level under the environmental temperature changed from 10°C to 60°C.

INDUSTRIAL APPLICABILITY

The present invention can provide an optical attenuator having a small variation of optical attenuation amount under the change of environmental temperature, or an optical attenuator having a small variation of optical attenuation amount in response to the change of polarization state of incident light such as polarization direction, and an optical head device comprising the above optical attenuator excellent in recording and reproducing properties of information.

Further, the optical attenuator can be used also as e.g. a variable attenuator to be used for optical communication system in the near-infrared wavelength region such as 1,550 nm wavelength region.

**Claims**

1. An optical attenuator comprising a liquid crystal element which comprises a pair of transparent substrates having transparent electrodes formed on their respective surfaces facing to each other and a liquid crystal layer sandwiched between the transparent electrodes, whereby the direction of liquid crystal molecules in the liquid crystal layer is twisted spirally around the axis in the thickness direction of the liquid crystal layer, and at least one polarizing transmission element varying the transmittance depending upon the polarization state of the incident light, **characterized in that** the ordinary refractive index ($n_o$) and the extraordinary refractive index ($n_e$) of liquid crystal

constituting the liquid crystal element, the angle ($\theta_{pt}$) of the liquid crystal molecules close to a transparent substrate against the transparent substrate surface, the thickness (d) of the liquid crystal layer and the wavelength ($\lambda$) of incident light, are determined so that the value A satisfies a range of from 0.5 to 1.5 in the first conditional formula defined by the formula (1):

$$A = \frac{\Delta n \cdot d}{\lambda} \tag{1}$$

wherein

$$\Delta n = n_o \cdot n_e / \sqrt{n_o^2 \cdot \cos^2 (\theta_{pt}) + n_e^2 \cdot \sin^2(\theta_{pt})} - n_o$$

2. The optical attenuator according to Claim 1, wherein the angle ($\theta_t$) between the two alignment directions of the respective liquid crystal molecules close to the pair of the transparent substrates, the quantity of light ($P_{in}$) incident into the optical attenuator and the quantity of light ($P_{out}$) output from the optical attenuator (provided that the light-reduction constant B is -60, and the value of the angle variable C is within a range of from 60 to 90), are determined so as to satisfy a second conditional formula defined by the formula (2):

$$\theta_t = \frac{P_{out} \cdot B}{P_{in}} + C \tag{2}$$

3. The optical attenuator according to Claim 1 or 2, which has two such polarizing transmission elements, which are disposed on the light incident side and the light output side of the liquid crystal, respectively.

4. The optical attenuator according to Claim 3, wherein at least one of the two such polarizing transmission elements, is made to be a polarizing diffraction element whereby the diffraction efficiency varies depending upon the polarization direction of the incident light.

5. The optical attenuator according to Claim 3 or 4, wherein at least one of the two such polarizing transmission elements is made to be integral with the liquid crystal element.

6. The optical attenuator according to any one of Claims 1 to 5, wherein the liquid crystal element is provided with nematic liquid crystal.

7. The optical attenuator according to any one of Claims 1 to 6, wherein the transparent substrate is made of glass.

8. An optical head device for reproducing and/or recording information, which comprises a light source, a light-converging means for converging light emitted from the light source on an optical recording medium, a photodetector for detecting a reflected light from the optical recording medium of the converged emission light, an optical attenuator to change the volume of the transmission light by an applied voltage, disposed in a light path between the light source and the optical recording medium or in a light path between the optical recording medium and the photodetector, and a voltage-controlling means to apply a voltage to the optical attenuator, **characterized in that** the optical attenuator is the optical attenuator as defined in any one of Claims 1 to 7.

9. The optical head device according to Claim 8,
   wherein the optical head device is an optical head device for carrying out reproducing and recording of information on an optical recording medium, wherein the ratio $P_1/P_2$ is within a range of from 0.2 to 0.8, where $P_1$ is the quantity of light converged on the optical recording medium for reproducing information, and $P_2$ is the quantity of light converged for recording information.

F i g. 1

F i g. 2

EP 1 602 964 A1

# Fig. 3

CELL GAP (μm)

# Fig. 4

CELL GAP (μm)

11

# F i g. 5

# F i g. 6

# F i g. 7

# F i g. 8

# F i g. 9

CELL GAP (μm)

PRETWIST ANGLE (°)

# F i g. 10

## F i g. 11

## F i g. 12

# F i g. 13

RELATIVE LIGHT INTENSITY RATIO (y-axis: 0.5, 0.6, 0.7, 0.8)

Without transmittance-polarization-anisotropic element in light-input side

With transmittance-polarization-anisotropic element in light-input side

DIRECTIONAL ERROR OF POLARIZATION DIRECTION OF INCIDENT LIGHT (°) (x-axis: -6, -4, -2, 0, 2, 4, 6)

## INTERNATIONAL SEARCH REPORT

| | International application No. |
|---|---|
| | PCT/JP2004/002755 |

### A. CLASSIFICATION OF SUBJECT MATTER
Int.Cl⁷ G02F1/13, G11B7/135

According to International Patent Classification (IPC) or to both national classification and IPC

### B. FIELDS SEARCHED

Minimum documentation searched (classification system followed by classification symbols)
Int.Cl⁷ G02F1/13, G11B7/135

Documentation searched other than minimum documentation to the extent that such documents are included in the fields searched
Jitsuyo Shinan Koho          1922-1996   Toroku Jitsuyo Shinan Koho   1994-2004
Kokai Jitsuyo Shinan Koho    1971-2004   Jitsuyo Shinan Toroku Koho   1996-2004

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2-222926 A (Casio Computer Co., Ltd.), 05 September, 1990 (05.09.90), Page 4, upper right column, lines 9 to 14; page 6, upper left column, lines 2 to 4; drawings (Family: none) | 1-9 |
| A | JP 2002-260269 A (Sony Corp.), 13 September, 2002 (13.09.02), Par. No. [0035]; Figs. 3, 4 (Family: none) | 1-9 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 May, 2004 (07.05.04) | 25 May, 2004 (25.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

17